# FASCICULE DE BREVET EUROPEEN

(11) **EP 2 603 747 B1**
(45) Date de publication et mention de la délivrance du brevet: **18.02.2015**
(21) Numéro de dépôt: 11755368.5
(22) Date de dépôt: 03.08.2011
(51) Int. Cl.: F25B 21/00

(54) **GENERATEUR THERMIQUE A MATERIAU MAGNETOCALORIQUE**
WÄRMEGENERATOR MIT MAGNETOKALORISCHEM MATERIAL
THERMAL GENERATOR CONTAINING MAGNETOCALORIC MATERIAL

(30) Priorité: 09.08.2010 US 852671; 09.08.2010 FR 1056506
(43) Date de publication de la demande: 19.06.2013
(73) Titulaire: Cooltech Applications, 67810 Holtzheim (FR)
(72) Inventeur: HEITZLER, Jean-Claude, F-68180 Horbourg-Wihr (FR); MULLER, Christian, F-67000 Strasbourg (FR)
(74) Mandataire: Koelbel, Caroline
(86) Numéro de dépôt international: PCT/FR2011/000454
(87) Numéro de publication internationale: WO 2012/020183

(56) Documents cités:
- WO-A1-2004/059222
- JP-A- 2004 317 040
- JP-A- 2005 090 921

## Description

### Domaine technique :

La présente invention concerne un générateur thermique avec au moins un module thermique comprenant au moins deux éléments magnétocaloriques.

### Technique antérieure :

La technologie du froid magnétique à température ambiante est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances des matériaux magnétocaloriques, la surface d'échange entre le fluide caloporteur et les matériaux magnétocaloriques, la performance des échangeurs de chaleur, etc.

Le choix des matériaux magnétocaloriques est déterminant et influence directement les performances d'un générateur thermique magnétocalorique. L'effet magnétocalorique culmine au voisinage de la température de Curie des matériaux magnétocaloriques. Il est connu, pour faire fonctionner un générateur thermique magnétocalorique dans une large gamme de températures, d'associer plusieurs matériaux magnétocaloriques présentant des températures de Curie différentes.

Ainsi, de nombreux générateurs thermiques magnétocaloriques exploitent l'effet magnétocalorique de plusieurs éléments magnétocaloriques en faisant circuler un fluide caloporteur le long ou à travers lesdits matériaux magnétocaloriques, dans deux sens opposés, en fonction des phases d'accroissement du champ magnétique et des phases de diminution du champ magnétique auxquelles sont soumis les matériaux magnétocaloriques. Lors du démarrage d'un tel générateur thermique, la circulation du fluide permet d'obtenir un gradient de température entre les extrémités opposées du matériau magnétocalorique. L'obtention de ce gradient de température dépend de différents facteurs tels que la température initiale, le débit du fluide caloporteur, l'intensité de l'effet magnétocalorique, la température de Curie et la longueur des matériaux magnétocaloriques. Plus la température initiale et la température de Curie du matériau magnétocalorique sont proches, plus vite sera atteint un gradient de température à partir duquel le générateur est fonctionnel et peut produire ou échanger de l'énergie thermique avec un circuit extérieur. Or, la température initiale du fluide caloporteur et des matériaux magnétocaloriques n'est pas contrôlée et est égale à la température extérieure au générateur. Elle peut par exemple s'inscrire dans une gamme très large de températures, par exemple entre - 20 et + 60°C. Ce qui implique que l'atteinte du gradient de température, c'est-à-dire la phase opérationnelle d'un générateur thermique magnétocalorique, peut être longue.

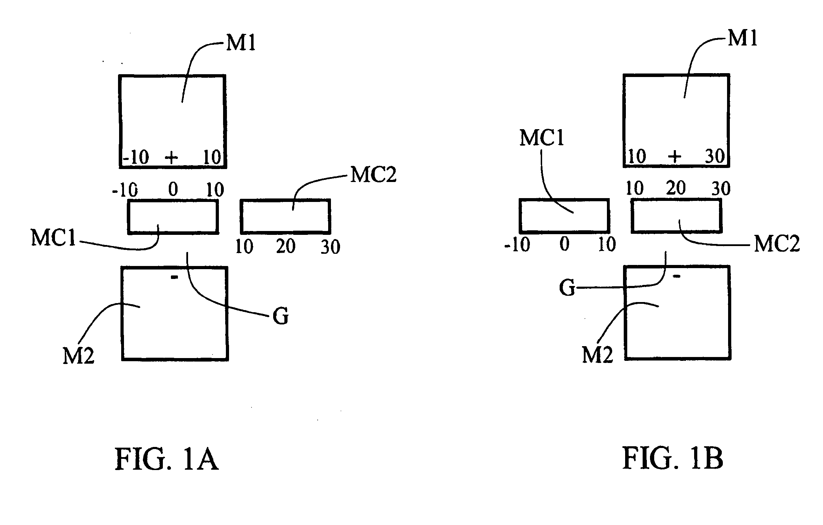

En outre, le fait de travailler sur une large gamme de température implique que le système magnétique, qui est en général constitué par un assemblage d'aimants permanents, subit une importante variation de température. En effet, les matériaux magnétocaloriques sont en général disposés dans l'entrefer du système magnétique et entraînent donc par convection thermique un changement de température au niveau du système magnétique. Les figures 1A et 1B illustrent à cet effet un générateur thermique comportant un système magnétique constitué par deux aimants M1 et M2 formant un entrefer G dans lequel se déplacent deux matériaux magnétocaloriques MC1 et MC2. Presque tout le volume de l'entrefer est rempli alternativement par un matériau magnétocalorique MC1 ou MC2. Lorsqu'un desdits matériaux magnétocaloriques MC1 et MC2 se trouve dans l'entrefer, il y a un espace minimal entre les aimants M1, M2 et ledit matériau magnétocalorique MC1, MC2, afin d'augmenter la puissance thermique. Le premier matériau magnétocalorique MC1 présente une température de Curie de 0°C et une zone de fonctionnement ou de transition allant de -10°C à +10°C et le deuxième matériau magnétocalorique MC2 présente une température de Curie de 20°C et une zone de fonctionnement ou de transition allant de +10°C à +30°C. La figure 1A représente une première phase du cycle dans laquelle le premier matériau magnétocalorique MC1 est soumis à un champ magnétique croissant et le deuxième matériau magnétocalorique MC2 est soumis à un champ magnétique décroissant et la figure 1B représente la deuxième phase du cycle dans laquelle le premier matériau magnétocalorique MC1 est soumis à un champ magnétique décroissant et le deuxième matériau magnétocalorique MC2 est soumis à un champ magnétique croissant. L'amplitude thermique subie par les aimants est de 40°C (de -10°C à +30°C). Les aimants, avec leur inertie thermique, ont une incidence néfaste sur le gradient de température dans les matériaux magnétocaloriques MC1 et MC2 : ils échangent thermiquement avec lesdits matériaux magnétocaloriques MC1 et MC2, ce qui réduit le gradient de température des matériaux magnétocaloriques. Il en résulte que la performance d'un générateur thermique magnétocalorique, qui est liée à ce gradient de température, est réduite.

JP-A-2004 317 040 décrit un générateur thermique selon le préambule de la revendication 1.

### Exposé de l'invention :

La présente invention a pour but de pallier les inconvénients précités en proposant un générateur thermique avec une efficacité thermique améliorée.

A cet effet, le générateur thermique selon l'invention est caractérisé :
- en ce qu'il comprend au moins deux ensembles magnétiques, chaque ensemble magnétique soumettant au moins un élément magnétocalorique dudit module thermique à une alternance de phases magnétiques, et
- en ce qu'il comprend un moyen d'isolation des ensembles magnétiques les uns des autres formant des cellules thermiquement isolées comprenant un ensemble magnétique et ses éléments magnétocaloriques associés.

De préférence, lesdits au moins deux éléments magnétocaloriques peuvent présenter des températures de Curie différentes et être reliés fluidiquement entre eux à leurs extrémités ou parties d'extrémité selon leur température de Curie croissante. Ledit module thermique peut présenter un gradient de température correspondant à la différence de température entre l'extrémité froide ou partie d'extrémité froide de l'élément magnétocalorique avec la température de Curie la plus faible et l'extrémité chaude ou partie d'extrémité chaude de l'élément magnétocalorique avec la température de Curie la plus importante. Lesdits au moins deux éléments magnétocaloriques peuvent de préférence couvrir le gradient de température du module thermique de sorte que deux éléments magnétocaloriques reliés fluidiquement entre eux présentent une température proche, et lesdits au moins deux éléments magnétocaloriques peuvent également être soumis chacun alternativement à une augmentation et à une diminution du champ magnétique tout en étant en contact avec un fluide caloporteur dont la direction d'écoulement change d'une extrémité ou partie d'extrémité à l'autre extrémité ou partie d'extrémité desdits éléments magnétocalorique à chaque changement de phase magnétique.

Les éléments magnétocaloriques sont destinés à être en contact thermique avec le fluide caloporteur circulant de leur extrémité froide vers leur extrémité chaude au cours d'une première phase du cycle magnétique qui correspond à une phase dans laquelle les matériaux ou éléments magnétocaloriques sont soumis à une augmentation de leur température (pour les éléments magnétocaloriques décrits, la phase d'augmentation du champ magnétique) et de leur extrémité chaude vers leur extrémité froide au cours d'une seconde phase du cycle magnétique dans laquelle les matériaux ou éléments magnétocaloriques sont soumis à une diminution de leur température (pour les éléments magnétocaloriques décrits, la phase de diminution du champ magnétique). Pour les matériaux comportant un effet magnétocalorique inverse, une augmentation du champ magnétique entraîne une diminution de leur température et une diminution du champ magnétique entraîne une augmentation de leur température. Le contact thermique entre le fluide caloporteur et les éléments magnétocaloriques peut être réalisé par un fluide caloporteur passant le long ou à travers des matériaux magnétocaloriques. A cet effet, les éléments magnétocaloriques peuvent être constitués par un ou plusieurs matériaux magnétocaloriques et peuvent être perméables au fluide caloporteur. Ils peuvent également comprendre des passages de circulation du fluide s'étendant entre les deux extrémités des matériaux magnétocaloriques. Ces passages peuvent être réalisés par la porosité des matériaux magnétocaloriques, ou par des canaux usinés ou obtenus par un ensemble de plaques de matériau magnétocalorique.

De préférence, le fluide caloporteur est un liquide. A cet effet, il est par exemple possible d'utiliser de l'eau pure ou additionnée d'antigel, un produit glycolé ou une saumure.

En outre, et selon l'invention, les extrémités des éléments magnétocaloriques qui sont reliés fluidiquement ont des températures proches, c'est-à-dire que la différence de température entre les deux extrémités reliées est faible, et ces deux extrémités ont de préférence la même température.

Une phase magnétique correspond à une augmentation ou à une diminution du champ magnétique. Ainsi, un cycle magnétique subi par un élément magnétocalorique correspond à une augmentation et à une diminution du champ magnétique dans ledit élément magnétocalorique et entraîne une augmentation et une diminution correspondantes (ou l'inverse) de la température dudit élément magnétocalorique.

Les ensembles magnétiques peuvent comprendre une combinaison d'aimants permanents comme cela est illustré ou des électroaimants. Lorsque des aimants permanents sont employés, le changement de phase magnétique peut être réalisé, par exemple, par un mouvement relatif entre les ensembles magnétiques et les éléments magnétocaloriques correspondants. Bien entendu, d'autres possibilités permettant de faire varier le champ magnétique ne sont pas exclues de la présente invention.

Selon l'invention, pour ledit module thermique, un ensemble magnétique peut être affecté à un élément magnétocalorique.

Ce générateur thermique peut également comprendre au moins deux modules thermiques et au moins un ensemble magnétique commun peut soumettre les éléments magnétocaloriques d'au moins deux modules thermiques à des phases magnétiques alternées.

Le moyen d'isolation peut être réalisé par une couche d'au moins un matériau thermiquement isolant disposé autour de chaque ensemble magnétique et ses éléments magnétocaloriques associés.

Le moyen d'isolation peut également être fixé aux ensembles magnétiques.

Selon l'invention, lesdites cellules thermiquement isolées peuvent être des enceintes étanches.

Ainsi, lesdites cellules thermiquement isolées peuvent être sous vide.

Lesdites cellules thermiquement isolées peuvent également être remplies d'un gaz ou d'un mélange de gaz différents à faible conductivité thermique. Ce gaz peut être de l'argon ou du krypton, par exemple.

Dans une première variante, la pression du gaz contenu dans lesdites cellules thermiquement isolées peut être égale à la pression atmosphérique.

Dans une autre variante, le gaz contenu dans lesdites cellules thermiquement isolées peut être sous pression.

En outre, une couche de matériau thermiquement isolant peut être disposée entre chaque ensemble magnétique et ses éléments magnétocaloriques associés.

### Description sommaire des dessins :

La présente invention et ses avantages apparaîtront mieux dans la description suivante de modes de réalisation donnés à titre d'exemples non limitatifs, en référence aux dessins annexés, dans lesquels:
- les figures 1A et 1B sont des représentations schématiques d'un générateur thermique selon l'art antérieur, respectivement dans deux phases magnétiques successives,
- les figures 2A et 2B sont des représentations schématiques d'un module thermique comprenant deux éléments magnétocaloriques d'un générateur selon un premier mode de réalisation de l'invention, respectivement dans deux phases magnétiques successives,
- les figures 3A et 3B sont des vues schématiques d'un module thermique d'un générateur selon un second mode de réalisation de l'invention, dans deux phases magnétiques successives,
- les figures 4A et 4B sont des vues schématiques en élévation frontale du générateur des figures 3A et 3B, et
- les figures 5A and 5B sont des vues schématiques de deux modules thermiques d'un générateur selon un troisième mode de réalisation de l'invention, dans deux phases magnétiques successives.

### Illustrations de l'invention :

Dans les modes de réalisation illustrés, les parties identiques portent les mêmes références numériques.

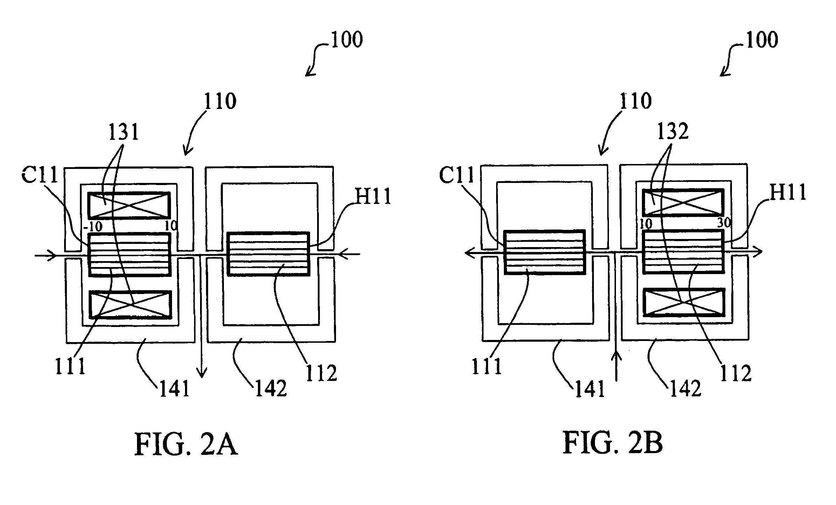

Les figures 2A et 2B représentent schématiquement un module thermique 110 d'un générateur thermique 100 selon un premier mode de réalisation de la présente invention. Ce module thermique 110 comprend deux éléments magnétocaloriques 111 et 112. L'extrémité froide C11 du module thermique 110 correspond à l'extrémité située sur le côté gauche des figures 2A et 2B du premier élément magnétocalorique 111 et l'extrémité chaude H11 du module thermique 110 correspond à l'extrémité située sur le côté droit des figures 2A et 2B du second élément magnétocalorique 112. Chaque élément magnétocalorique 111 et 112 est soumis à un cycle magnétique réalisé par un ensemble magnétique correspondant 131, 132. Au cours le la première alternance (voir fig. 2A), le fluide caloporteur F circule de l'extrémité froide C11 de l'élément magnétocalorique 111 soumis à une augmentation du champ magnétique vers l'autre extrémité de cet élément magnétocalorique 111 (son extrémité chaude) et de l'extrémité chaude H11 de l'élément magnétocalorique 112 soumis à une diminution du champ magnétique vers l'autre extrémité de cet élément magnétocalorique 112 (son extrémité froide) et lors de la deuxième alternance, la direction de circulation est inversée.

Chaque ensemble magnétique 131, 132 est constitué par deux aimants permanents disposés face à face l'un de l'autre. Cela permet de réaliser une isolation thermique entre les deux ensembles magnétiques 131, 132 avec leurs matériaux magnétocaloriques associés 111 et 112 en créant des cellules isolées thermiquement 141 and 142. L'isolation thermique est réalisée par une couche d'un matériau très fortement isolant disposé autour des ensembles magnétiques 131, 132. Dans cet exemple, le déplacement de l'ensemble magnétique entraîne un changement du champ magnétique.

Les éléments magnétocaloriques 111 et 112 ont les mêmes caractéristiques que les éléments magnétocaloriques MC1 et MC2 décrits en relation avec le générateur de l'art antérieur représenté sur les figures 1A et 1B. Toutefois, le générateur thermique 100 de l'invention présente un rendement augmenté car l'impact thermique de la masse inactive des aimants 131, 132 est réduit grâce à la présence de deux cellules isolées thermiquement 141 et 142. Ainsi, dans les cellules 141 et 142, le gradient de température subi par les ensembles magnétiques 131 et 132 s'élève à vingt degrés (respectivement entre -10°C et +10°C et entre +10°C et +30°C) tandis qu'il s'élevait à quarante degrés dans le générateur de l'art antérieur. Ainsi, la différence de température entre les matériaux magnétocaloriques 111 et 112 et leurs ensembles magnétiques 131, 132 correspondants est également réduite, de sorte que le rendement du générateur thermique est augmenté.

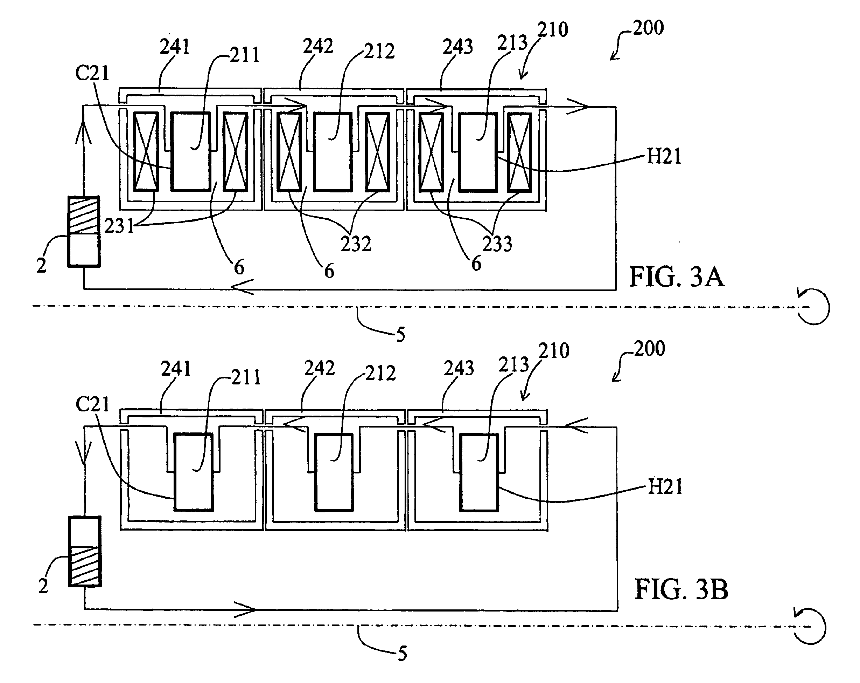

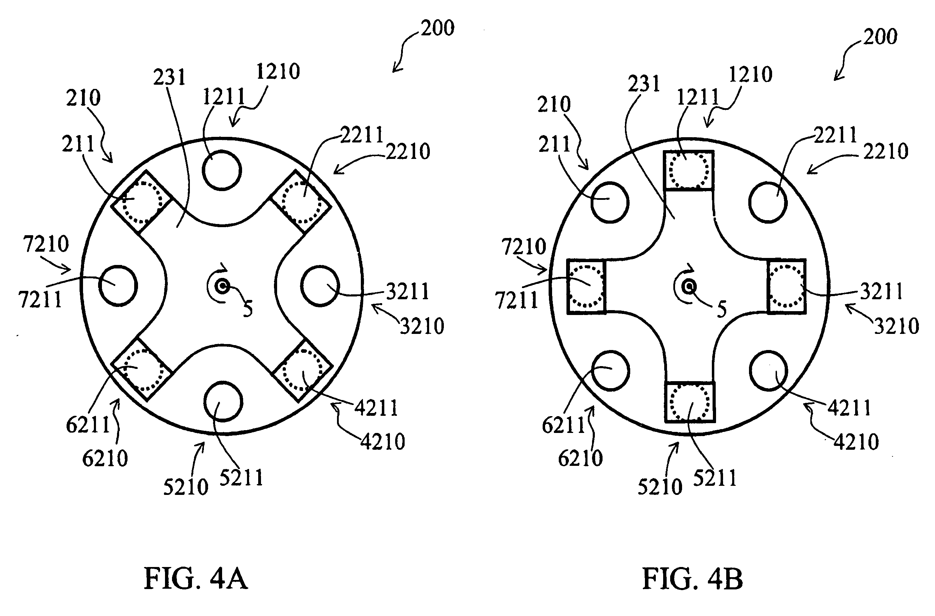

Les figures 3A et 3B représentent schématiquement un module thermique 210 d'un générateur thermique 200 selon un second mode de réalisation de la présente invention. Cet exemple est particulièrement adapté pour les générateurs thermiques 200 rotatifs dans lesquels les ensembles magnétiques 231, 232, 233 sont fixés à un arbre en rotation autour d'un axe longitudinal 5 du générateur 200. Les figures 4A et 4B représentent une vue simplifiée en élévation frontale de ce générateur thermique 200 montrant plus particulièrement une partie de l'ensemble magnétique 231 dans les positions correspondant respectivement à celles des figures 3A et 3B.

Ces figures 4A et 4B montrent l'interaction entre les ensembles magnétiques 231 et un élément magnétocalorique 211, 1211, 2211, 3211, 4211, 5211, 6211 et 7211 des huit modules thermiques 210, 1210, 2210, 3210, 4210, 5210, 6210 et 7210 de ce générateur thermique 200. Chaque ensemble magnétique 231, 232, 233 est constitué par deux groupes de quatre aimants permanent disposés face à face les uns des autres et formant un entrefer magnétique 6 dans lesquels sont positionnés les matériaux magnétocaloriques des modules thermiques correspondants. Ces aimants permanents sont régulièrement espacés autour de l'axe longitudinal 5 du générateur thermique magnétocalorique 200 de sorte qu'ils créent quatre secteurs radiaux magnétiques séparés par quatre secteurs radiaux non magnétiques (voir en particulier les figures 4A et 4B). Ainsi, la rotation de l'arbre ou axe 5 entraîne les ensembles magnétiques 231, 232, 233 qui soumettent les éléments magnétocaloriques correspondants à une variation du champ magnétique et donc à une augmentation et une diminution de leur température en fonction de leur phase magnétique.

Le module thermique 210 comporte trois éléments magnétocaloriques 211, 212 et 213 reliés par un fluide caloporteur circulant à travers lesdits éléments magnétocaloriques 211, 212, 213. Dans cet exemple, le matériau magnétocalorique 211 disposé à gauche sur les figures 3A et 3B présente la température de Curie la plus faible et est apte à générer un gradient de température de -10°C à 0°C entre ses extrémités froide et chaude. Il est en contact fluidique avec le matériau magnétocalorique 212 positionné au centre du module thermique 210 qui est apte à générer un gradient de température de 0°C à +10°C entre ses extrémités froide et chaude. Enfin, le troisième matériau magnétocalorique 213, qui présente la température de Curie la plus importante est relié au second matériau magnétocalorique 212 et est apte à réaliser un gradient de température de +10°C à +20°C.

Ce mode de réalisation comprend huit modules thermiques 210, 1210, 2210, 3210, 4210, 5210, 6210 et 7210, les matériaux magnétocaloriques étant disposés radialement autour de l'arbre, de sorte que lorsqu'un matériau magnétocalorique est dans l'entrefer de l'ensemble magnétique (c'est-à-dire entre deux aimants permanents), les deux matériaux magnétocaloriques adjacents sont à l'extérieur de l'entrefer, et inversement. Une telle configuration permet d'optimiser le volume du générateur thermique 200 en exploitant de manière continue le champ magnétique réalisé par les ensembles magnétiques 231, 232, 233. A cet effet, les figures 3A, 3B et 4A, 4B représentent deux phases magnétiques successives subies par les matériaux magnétocaloriques.

Dans ce second mode de réalisation, les ensembles magnétiques 231, 232, 233 sont isolés par des couches d'une mousse à haute performance d'isolation placées sur lesdits ensembles magnétiques 231, 232, 233 (pour l'isolation longitudinale) et autour du générateur thermique 200 (pour l'isolation radiale) de sorte que vingt-quatre cellules thermiquement isolées sont créées (seules les cellules 241, 242 et 243 sont représentées). Dans ces conditions, dans chaque cellule isolée 241, 242, 243, la différence de température entre le matériau magnétocalorique 211, 212, 213 et l'ensemble magnétique 231, 232, 233 correspondant est faible et n'a pas d'influence sur le gradient de température des matériaux magnétocalorique. En d'autres termes, les ensembles magnétiques 231, 232, 233 des matériaux magnétocaloriques correspondants 211, 212, 213 sont sectionnés et forment des cellules individuelles thermiquement isolées 241, 242, 243 qui peuvent échanger thermiquement uniquement avec le fluide circulant à travers toutes ces cellules. L'isolation thermique est réalisée par une couche de matériau thermiquement isolant telle qu'une mousse à haute performance d'isolation. Cette couche peut également être appliquée sur un autre composant ou une armature à l'intérieur du générateur thermique 200 pour créer ces cellules thermiquement isolées.

Bien que ce second mode de réalisation décrit une configuration avec trois ensembles magnétiques et huit modules thermiques, l'invention n'est pas limitée à ce nombre d'ensembles magnétiques et de matériaux magnétocaloriques. D'autres configurations sont possibles et peuvent dépendre de l'application à relier au générateur thermique magnétocalorique, du volume disponible pour le générateur thermique magnétocalorique, etc.

Le déplacement du fluide caloporteur dans deux directions opposées est réalisé par un piston 2 associé à chaque module thermique 210, mais un autre dispositif adapté peut également être utilisé. Le piston 2 déplace le fluide caloporteur en direction de l'extrémité chaude H21 du module thermique 210 au cours de l'échauffement des matériaux magnétocaloriques correspondants (fig. 3A) et en direction de l'extrémité froide C21 du module thermique 210 au cours du refroidissement des matériaux magnétocaloriques correspondants (fig. 3B).

Ainsi, dans la figure 3A, le module thermique 210 subit une augmentation de température car les matériaux magnétocaloriques 211, 212, 213 sont disposés dans l'entrefer 6 des ensembles magnétiques correspondants 231, 232, 233 et le fluide caloporteur est déplacé de l'extrémité froide C21 du matériau magnétocalorique 211 avec la température de Curie la plus faible du module thermique 210 vers l'extrémité chaude H21 du matériau magnétocalorique 213 avec la température de Curie la plus élevée. Dans la figure 3B, le module thermique 210 subit une diminution de température car les matériaux magnétocaloriques 211, 212, 213 sont à l'extérieur de l'entrefer des ensembles magnétiques 231, 232, 233 et le fluide caloporteur est déplacé de l'extrémité chaude H21 du matériau magnétocalorique 213 avec la température de Curie la plus élevée du module thermique 210 vers l'extrémité froide C21 du matériau magnétocalorique 211 avec la température de Curie la plus faible. Cette alternance de directions de circulation du fluide permet d'obtenir et de conserver un gradient de température dans le module thermique 210.

Selon l'invention, le fait de diviser thermiquement les ensembles magnétiques 231, 232, 233 et d'affecter un ou plusieurs matériaux magnétocaloriques capables de fonctionner sur une plage limitée de températures présente deux avantages principaux. D'une part, au démarrage du générateur thermique, les matériaux magnétocaloriques 211, 212, 213 conservent leur température entre deux phases magnétiques et le gradient de température global dans le module thermique 210 est atteint plus rapidement. L'isolation thermique permet de profiter de l'inertie thermique des matériaux magnétocaloriques 211, 212, 213. D'autre part, la performance du générateur thermique 200 est augmentée car le gradient de température subi dans chaque paire d'aimants 231, 232, 233 est limité, ainsi les aimants ont moins d'influence thermique sur le gradient de température du matériau magnétocalorique correspondant 211, 212, 213 et aucune énergie n'est utilisée pour réobtenir le gradient de température maximal dans ledit matériau magnétocalorique. L'isolation thermique permet également de profiter de l'inertie thermique des ensembles magnétiques 231, 232, 233.

De plus, il est possible de réaliser des cellules isolées 241, 242, 243 en tant qu'enceintes étanches et de les mettre sous vide ou de les remplir avec un gaz à faible conductivité thermique tel que l'argon ou le krypton, par exemple, ou avec un mélange de ces gaz. De préférence, ce gaz a une pression égale à la pression atmosphérique. Il peut également être pressurisé. Des systèmes d'étanchéité à presse-étoupe peuvent être employées pour garantir l'étanchéité des enceintes tout en permettant les raccordements (électriques, mécaniques, etc.) avec l'extérieur des enceintes.

Les cellules isolées selon l'invention sont particulièrement réalisables dans les configurations telles que celles décrites car la direction de circulation du fluide dans les éléments magnétocaloriques est perpendiculaire à la direction de variation du champ magnétique.

Les mêmes avantages que ceux décrits précédemment en relation avec le premier mode de réalisation s'appliquent également à ce second mode de réalisation.

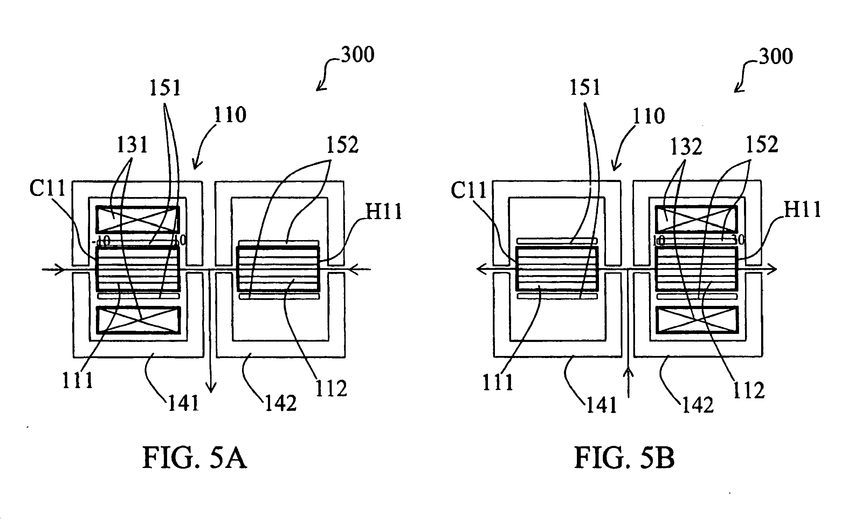

Les figures 5A et 5B représentent un générateur thermique 300 selon une variante de réalisation du générateur 100 des figures 2A et 2B. Elle propose d'interposer un matériau thermiquement isolant 151, 152 entre les ensembles magnétiques 131, 132 et leurs éléments magnétocaloriques correspondants 111, 112. Dans les figures 5A et 5B, ce matériau isolant 151, 152 est une couche de mousse placée sur les éléments magnétocaloriques 111, 112. Le matériau isolant peut également être un matériau de type aérogel. Toutefois, l'invention n'est pas liée à ce type de configuration, la mousse pouvant également être appliquée sur les ensembles magnétiques 131, 132, par exemple. Cette configuration préférée permet de réduire encore l'effet thermique des ensembles magnétiques sur les éléments magnétocaloriques 111, 112.

### Possibilités d'application industrielle :

Ce générateur thermique 100, 200, 300 trouve son application dans tout domaine technique dans lequel il est nécessaire de chauffer, tempérer, refroidir ou climatiser.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique (100, 200, 300) avec au moins un module thermique (110, 210) comprenant au moins deux éléments magnétocaloriques (111, 112, 211, 212, 213), générateur thermique (100, 200, 300) **caractérisé :**
- **en ce qu'**il comprend au moins deux ensembles magnétiques (131, 132, 231, 232, 233), chaque ensemble magnétique (131, 132, 231, 232, 233) soumettant au moins un élément magnétocalorique (111, 112, 211, 212, 213) dudit module thermique (110, 210) à une alternance de phases magnétiques, et
- **en ce qu'**il comprend un moyen d'isolation des ensembles magnétiques (131, 132, 231, 232, 233) les uns des autres formant des cellules thermiquement isolées (141, 142, 241, 242, 243) comprenant un ensemble magnétique (131, 132, 231, 232, 233) et ses éléments magnétocaloriques associés (111, 112, 211, 212, 213).

2. Générateur thermique selon la revendication 1, **caractérisé en ce que** pour ledit module thermique (110, 210), un ensemble magnétique (131, 132, 231, 232, 233) est affecté à un élément magnétocalorique (111, 112, 211, 212, 213).

3. Générateur thermique selon la revendication 1 ou 2, **caractérisé en ce qu'**il comprend au moins deux modules thermiques (210, 1210, 2210, 3210, 4210, 5210, 6210, 7210) et **en ce qu'**au moins un ensemble magnétique (231, 232, 233) commun soumet les éléments magnétocaloriques d'au moins deux modules thermiques (210, 1210, 2210, 3210, 4210, 5210, 6210, 7210) à des phases magnétiques alternées.

4. Générateur thermique selon l'une quelconque des revendications précédentes, **caractérisé en ce que** le moyen d'isolation est réalisé par une couche d'au moins un matériau thermiquement isolant disposé autour de chaque ensemble magnétique (131, 132, 231, 232, 233) et ses éléments magnétocaloriques associés (111, 112, 211, 212,213).

5. Générateur thermique selon l'une quelconque des revendications précédentes, **caractérisé en ce que** le moyen d'isolation est fixé aux ensembles magnétiques.

6. Générateur thermique selon l'une des revendications précédentes, **caractérisé en ce que** lesdites cellules thermiquement isolées (141, 142, 241, 242, 243) sont des enceintes étanches.

7. Générateur thermique selon la revendication 6, **caractérisé en ce que** lesdites cellules thermiquement isolées (141, 142, 241, 242, 243) sont sous vide.

8. Générateur thermique selon la revendication 6, **caractérisé en ce que** lesdites cellules thermiquement isolées (141, 142, 241, 242, 243) sont remplies d'un gaz ou d'un mélange de gaz à faible conductivité thermique.

9. Générateur thermique selon la revendication 8, **caractérisé en ce que** la pression du gaz contenu dans lesdites cellules thermiquement isolées (141, 142, 241, 242, 243) est égale à la pression atmosphérique.

10. Générateur thermique selon la revendication 8, **caractérisé en ce que** le gaz contenu dans lesdites cellules thermiquement isolées (141, 142, 241, 242, 243) est sous pression.

11. Générateur thermique selon l'une des revendications précédentes, **caractérisé en ce qu'**une couche de matériau thermiquement isolant (151, 152) est disposée entre chaque ensemble magnétique (131, 132) et ses éléments magnétocaloriques associés (111, 112).

## Patentansprüche

1. Wärmeerzeuger (100, 200, 300) mit zumindest einem mit zumindest zwei magnetokalorischen Elemente (111, 112, 211, 212, 213) versehenen Wärmemodul (110, 210), **dadurch gekennzeichnete**r Wärmeerzeuger (100, 200, 300) :
- dass er zumindest zwei magnetische Anordnungen (131, 132, 231, 232, 233) beträgt, wobei jede magnetische Anordnung (131, 132, 231, 232, 233) zumindest ein magnetokalorisches Element (111, 112, 211, 212, 213) des besagten Wärmemoduls (110, 210) einer Abwechslung magnetischer Phasen unterzieht, und
- dass er ein Mittel zur Isolation der magnetischen Anordnungen (131, 132, 231, 232, 233) voneinander beträgt, das thermisch isolierte Zellen (141, 142, 241, 242, 243) bildet, die eine magnetische Anordnung (131, 132, 231, 232, 233) und die damit verbundenen magnetokalorischen Elemente (111, 112, 211, 212, 213) enthalten.

2. Wärmeerzeuger nach Anspruch 1, **dadurch gekennzeichnet, dass** für das besagte Wärmemodul (110, 210) eine magnetische Anordnung (131, 132, 231, 232, 233) einem magnetokalorischen Element (111, 112, 211, 212, 213) zugewiesen ist.

3. Wärmeerzeuger nach Anspruch 1 oder 2, **dadurch gekennzeichnet, dass** er zumindest zwei Wärmemodule (210, 1210, 2210, 3210, 4210, 5210, 6210, 7210) beträgt und dadurch, dass zumindest eine gemeinsame magnetische Anordnung (231, 232, 233) die magnetokalorischen Elemente von zumindest zwei Wärmemodulen (210, 1210, 2210, 3210, 4210, 5210, 6210, 7210) abwechselnden magnetischen Phasen unterzieht.

4. Wärmeerzeuger nach einem beliebigen der vorhergehenden Ansprüche, **dadurch gekennzeichnet, dass** das Mittel zur Isolation aus einer Schicht zumindest eines um jede magnetische Anordnung (131, 132, 231, 232, 233) und um seine verbundenen magnetokalorischen Elemente (111, 112, 211, 212, 213) angeordneten wärmeisolierenden Materials hergestellt ist.

5. Wärmeerzeuger nach einem beliebigen der vorhergehenden Ansprüche, **dadurch gekennzeichnet, dass** das Mittel zur Isolation an den magnetischen Anordnungen befestigt ist.

6. Wärmeerzeuger nach einem beliebigen der vorhergehenden Ansprüche, **dadurch gekennzeichnet, dass** die besagten thermisch isolierten Zellen (141, 142, 241, 242, 243) dichte Zellen sind.

7. Wärmeerzeuger nach Anspruch 6, **dadurch gekennzeichnet, dass** die besagten thermisch isolierten Zellen (141, 142, 241, 242, 243) unter Vakuum stehen.

8. Wärmeerzeuger nach Anspruch 6, **dadurch gekennzeichnet, dass** die besagten thermisch isolierten Zellen (141, 142, 241, 242, 243) mit einem Gas oder einer Gasmischung mit geringer Wärmeleitfähigkeit gefällt sind.

9. Wärmeerzeuger nach Anspruch 8, **dadurch gekennzeichnet, dass** der Druck des in den besagten thermisch isolierten Zellen (141, 142, 241, 242, 243) enthaltenen Gases gleich dem atmosphärischen Druck ist.

10. Wärmeerzeuger nach Anspruch 8, **dadurch gekennzeichnet, dass** der in den besagten thermisch isolierten Zellen (141, 142, 241, 242, 243) enthaltene Gas unter Druck steht.

11. Wärmeerzeuger nach einem beliebigen der vorhergehenden Ansprüche, **dadurch gekennzeichnet, dass** eine Schicht eines wärmeisolierenden Materials (151, 152) zwischen jeder magnetischen Anordnung (131, 132) und seiner verbundenen magnetokalorischen Elemente (111, 112) angeordnet ist.

## Claims

1. Thermal generator (100, 200, 300) with at least one thermal module (110, 210) comprising at least two magnetocaloric elements (111, 112, 211, 212, 213), thermal generator (100, 200, 300) **characterized:**
- **in that** it comprises at least two magnetic assemblies (131, 132, 231, 232, 233), each magnetic assembly (131, 132, 231, 232, 233) subjecting at least one magnetocaloric element (111, 112, 211, 212, 213) of said thermal module (110, 210) to an alternation of magnetic phases, and
- **in that** it comprises a means for isolating the magnetic assemblies (131, 132, 231, 232, 233) from each other, forming thermally insulated cells (141, 142, 241, 242, 243) comprising a magnetic assembly (131, 132, 231, 232, 233) and the associated magnetocaloric elements (111, 112, 211, 212, 213) thereof.

2. Thermal generator according to claim 1, **characterized in that** for said thermal module (110, 210) a magnetic assembly (131, 132, 231, 232, 233) is assigned to a magnetocaloric element (111, 112, 211, 212, 213).

3. Thermal generator according to claim 1 or 2, **characterized in that** it comprises at least two thermal modules (210, 1210, 2210, 3210, 4210, 5210, 6210, 7210) and **in that** at least one common magnetic assembly (231, 232, 233) subjects the magnetocaloric elements of at least two thermal modules (210, 1210, 2210, 3210, 4210, 5210, 6210, 7210) to alternating magnetic phases.

4. Thermal generator according to any of the previous claims, **characterized in that** the insulation means is made of a layer of at least one thermally insulating material arranged around each magnetic assembly (131, 132, 231, 232, 233) and its associated magnetocaloric elements (111, 112, 211, 212, 213).

5. Thermal generator according to any of the previous claims, **characterized in that** the insulation means is fastened to the magnetic assemblies.

6. Thermal generator according to any of the previous claims, **characterized in that** said thermally insulated cells (141, 142, 241, 242, 243) are sealed enclosures.

7. Thermal generator according to claim 6, **characterized in that** said thermally insulated cells (141, 142, 241, 242, 243) are under vacuum.

8. Thermal generator according to claim 6, **characterized in that** said thermally insulated cells (141, 142, 241, 242, 243) are filled with a gas or a mix of gases with low thermal conductivity.

9. Thermal generator according to claim 8, **characterized in that** the pressure of the gas contained in said thermally insulated cells (141, 142, 241, 242, 243) is equal to the atmospheric pressure.

10. Thermal generator according to claim 8, **characterized in that** the gas contained in said thermally insulated cells (141, 142, 241, 242, 243) is under pressure.

11. Thermal generator according to any of the previous claims, **characterized in that** a layer of thermally insulating material (151, 152) is arranged between each magnetic assembly (131, 132) and the associated magnetocaloric elements (111, 112) thereof.
